## Europäisches Patentamt

## European Patent Office

## Office européen des brevets

(19)

(11) Veröffentlichungsnummer: **0 054 141**

**A1**

(12) **EUROPÄISCHE PATENTANMELDUNG**

(21) Anmeldenummer: **81108700.6**

(22) Anmeldetag: **22.10.81**

(51) Int. Cl.³: **C 08 F 291/02**
**C 08 F 279/02, C 08 F 2/06**

(30) Priorität: **16.12.80 DE 3047293**

(43) Veröffentlichungstag der Anmeldung:
**23.06.82 Patentblatt 82/25**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Echte, Adolf, Dr.**
**Leuschnerstrasse 42**
**D-6700 Ludwigshafen(DE)**

(72) Erfinder: **Gausepohl, Hermann, Dr.**
**Neuweg 10**
**D-6704 Mutterstadt(DE)**

(72) Erfinder: **Gerberding, Karl, Dr.**
**In der Dreispitz 9**
**D-6706 Wachenheim(DE)**

(54) Verfahren zur Herstellung von ABS-Polymerisaten, Verwendung derselben, sowie Formteile aus diesen.

(57) Die Erfindung betrifft ein Verfahren zur Herstellung von ABS-Polymerisaten durch kontinuierliche Polymerisation eines Gemisches aus einem vinylaromatischen Monomeren und einem äthylenisch ungesättigten Monomeren in Gegenwart von einem kautschukartigen Polymerisat, dessen Lösungsviskosität, gemessen in 5gew.%ige Lösung in Styrol bei 25°C, ≤ 80 mPa.s beträgt,
einem Lösungsmitteil, wobei das Verhältnis der Lösungsviskosität des kautschukartigen Polymerisats zur Konzentration des Lösungsmittels in Gew.%, ≤ 2,5 mPa.s/% Lösungsmittel beträgt, und
einem Radikalinitiator
bei erhöhter Temperatur in zwei oder mehr Reaktionszonen. Anschließend werden die Monomeren und das Lösungsmittel in einer Entgasungszone entfernt.
Die erfindungsgemäßen Formmassen werden zur Herstellung von Formteilen verwendet.

EP 0 054 141 A1

BASF Aktiengesellschaft                    O.Z.    0050/034820


Verfahren zur Herstellung von ABS-Polymerisaten,
Verwendung derselben, sowie Formteile aus diesen


Die Erfindung betrifft ein kontinuierliches Verfahren
zur Herstellung von ABS-Polymerisaten in Lösung in zwei
oder mehr Reaktionszonen unter Rühren und in Gegenwart
von Radikalinitiatoren und gegebenenfalls von Mercaptanen
als Kettenüberträger.


Zum Stand der Technik nennen wir:


(1) DE-OS 21 35 348
(2) DE-OS 24 48 596
(3) US-PS 3 903 199
(4) US-PS 3 903 200


Die Bemühungen zur Herstellung eines Lösungs-ABS mit polymodalem Teilchenaufbau [vgl. (3) und (4)] bzw. mit
ausschließlich kleinen Teilchendurchmessern der Weichphase sind nicht neu. Beispielsweise wird in (2) der
Einsatz von Mineralöl empfohlen um kleine Teilchendurchmesser der Weichphase zu erhalten. Bei diesem Verfahren
wird jedoch der Erweichungspunkt der Polymerisate stark
erniedrigt.


In (2) ist eine Masse-Suspensionspolymerisation für ein
ABS-Polymerisat zur Herstellung von Mischungen mit Polyestern beschrieben. Für den ABS-Bestandteil sollen Teilchengrößen von 0,5 bis 2,0 μm erzielt werden. Durch Anwendung
hoher Initiatorkonzentrationen (vgl. Beispiel 1) und der
damit verbundenen hohen Reaktionsgeschwindigkeiten (Seite 8)
erhält man Teilchen mit einem Durchmesser <1 μm.


Vo/BL

Dieses Verfahren läßt sich jedoch auf eine kontinuierliche Lösungspolymerisation nicht anwenden, da die hohen Reaktionsgeschwindigkeiten bei höheren Umsätzen zu Anbackungen in den Reaktoren führen.

Aufgabe war es daher, ein Verfahren zu finden, das auch im kontinuierlichen Prozeß zu kleinen Kautschukteilchen führt.

Die Lösung der Aufgabe gelingt bei Einhaltung der im Patentanspruch 1 genannten Maßnahmen.

Die kontinuierliche Herstellung von ABS-Polymerisaten in zwei oder mehr Reaktionszonen ist dem Fachmann an sich von der Herstellung schlagfester Polymerisate des Styrols bekannt (vgl. US-PS 3 243 481 Kessel-Turmkaskade bzw. Kessel und liegender Reaktor US-PS 3 903 202). Das Verfahren wird im Temperaturbereich von 80 bis 180°C durchgeführt; in der Entgasungsstufe werden gegebenenfalls höhere Temperaturen angewendet. Es ist dem Fachmann bekannt, welche Temperaturen in welcher Reaktionszone anzuwenden sind, um die gewünschten Produkte bzw. Produkteigenschaften einzustellen.

Das erfindungsgemäße Verfahren wird in mindestens 2 Reaktionszonen durchgeführt, die jeweils isotherm betrieben werden. So ist es möglich, das Verfahren in 2 Reaktionszonen unterschiedlicher Bauart, z.B. einem Rührkesselreaktor und einem Röhrenreaktor durchzuführen. Bevorzugt wird das erfindungsgemäße Verfahren jedoch in mehr als 2 Reaktionszonen, z.B. in einer 3-Turmkaskade durchgeführt.

Zur Durchführung des erfindungsgemäßen Verfahrens kommen als vinylaromatische Monomere $a_1$) insbesondere Styrol in Frage. Andere vinylaromatische Monomere wie $\alpha$-Methylstyrol, o-, m-, p-Methylstyrol oder tert.-Butylstyrol können ebenfalls angewendet werden, gegebenenfalls in Mischung mit dem bevorzugt angewendeten Styrol.

Als äthylenisch ungesättigte Monomere $a_2$) kommen Acryl- oder Methacrylsäurederivate in Betracht, von denen mindestens eines angewendet wird; bevorzugt wird Acrylnitril allein verwendet. Das Verhältnis der vinylaromatischen Monomeren $a_1$) zu den äthylenisch ungesättigten Monomeren $a_2$) im Gemisch kann im Gewichtsverhältnis von 90:10 bis 10:90 vorliegen. Besonders bevorzugt sind Gewichtsverhältnisse von Styrol im Bereich von 60 bis 90 und entsprechend 40 bis 10 Gewichtsprozent Acrylnitril.

Als kautschukartige Polymerisate $a_3$) werden für das erfindungsgemäße Verfahren natürliche oder synthetische Kautschuke auf Butadien- und Isoprenbasis eingesetzt. Ferner sind geeignet Styrol-Butadien-Blockcopolymerisate. Alle vorstehend genannten kautschukartigen Polymerisate müssen Lösungsviskositäten von $\leq 80$ mPa.s aufweisen. Die genannten kautschukartigen Polymerisate werden in einem Anteil von 3 bis 35 Gew.%, bezogen auf die Summe der Monomeren $a_1$) und $a_2$), angewendet.

Als Lösungsmittel $a_4$) für das erfindungsgemäße Verfahren können sowohl polare, wie unpolare Verbindungen oder Mischungen aus diesen verwendet werden. Bevorzugt verwendet werden Methylethylketon, Toluol oder Ethylbenzol. Die genannten Lösungsmittel dürfen nur in einer solchen Konzentration in Gew.%, bezogen auf den Ansatz aus $a_1 + a_2 + a_3 + a_4$, angewendet werden, daß das Verhältnis der Lösungsviskosität des kautschukartigen Polymerisats $a_3$)

zur Konzentration des gewählten Lösungsmittel bzw. Lösungsmittelgemisches $a_4$) Werte von $\leq 2,5$ mPa.s./% Lösungsmittel aufweist. Bevorzugt soll dieses Verhältnis $\leq 2$ mPa.s./% betragen; die Art und max. Menge des Lösungsmittels und damit der untere Grenzwert richten sich nach Zweckmäßigkeitsbetrachtungen energetischer und wirtschaftlicher Art. Ein allgemein gültiger, unterer Grenzwert kann daher nicht angegeben werden. Jedoch wird man i.a. nicht mehr als 80 % Lösungsmittel verwenden wollen. Für einen Kautschuk von 80 mPa.s würde der Grenzwert dann 1 mPa.s/% Lösungsmittel und für einen Kautschuk von 20 mPa.s würde der Grenzwert 0,28 mPa.s/%Lösungsmittel betragen.

Geeignete Radikalinitiatoren $a_5$) sind pfropfaktive Peroxide. Besonders bevorzugt sind Dibenzoylperoxid, tert.-Butylperoctoat und tert.-Butylperbenzoat. Die Initiatoren werden in Mengen von 0,02 bis 0,5 Gew.%, bezogen auf Monomere $a_1$)+$a_2$), angewendet.

Als Kettenüberträger $a_6$) kommen die üblicherweise verwendeten Mercaptane mit 14 bis 18 C-Atomen in Betracht. Von den Mercaptanen haben sich besonders das n-Butylmercaptan, das n-Octylmercaptan sowie das n-n oder t.-Dodecylmercaptan bewährt. Die Menge an Mercaptan beträgt, falls diese angewendet werden, in der Regel 0,01 bis 0,3 Gew.%, bezogen auf die Monomeren $a_1$) und $a_2$).

Nach dem erfindungsgemäßen Verfahren können schlagzähe Styrol-Acrylnitril-Polymerisate, sogenannte ABS-Polymerisate, durch kontinuierliche Lösungspolymerisation mit Teilchengrößen von $<0,7$ µm erhalten werden. Es ist möglich, übliche Gleitmittel und Stabilisatoren nach der Lösung des kautschukartigen Polymerisats zuzusetzen, da diese Stoffe die Polymerisation nicht stören. Vor der Verarbeitung der nach dem erfindungsgemäßen Verfahren erhaltenen Polymerisaten können dann weitere übliche Zusatzstoffe, wie Schmiermittel, Füllstoffe und dergleichen, zugesetzt werden.

Die erfindungsgemäßen Formmassen können nach den bekannten Verfahren der Thermoplastverarbeitung bearbeitet werden, also z.B. durch Extrudieren, Spritzgießen, Kalandrieren, Hohlkörperblasen, Pressen oder Sintern; besonders bevorzugt werden aus dem nach dem erfindungsgemäßen Verfahren hergestellten Formmassen Formteile durch Spritzgießen hergestellt.

Die nach dem erfindungsgemäßen Verfahren erhaltenen ABS-Polymerisate können auch zur Abmischung mit anderen ABS-Polymerisaten, die andere Teilchengrößen besitzen, verwendet werden.

Die in den Beispielen und Vergleichsversuchen aufgeführten Produkteigenschaften wurden wie folgt gemessen:

1. Die Lösungsviskosität, LV, des kautschukartigen Polymerisats wird in einer 5gew.%igen Lösung in Styrol bei 25°C gemessen.

2. Die mittlere Teilchengröße der Weichkomponentenphase wird durch Auswertung elektronenmikroskopischer Aufnahmen ermittelt.

Die Erfindung wird nachstehend anhand von Beispielen und Vergleichsversuchen näher erläutert. Alle angegebenen Teile und Prozente beziehen sich, sofern nichts anderes vermerkt ist, auf das Gewicht.

**0054141**

Beispiel 1

Eine Mischung aus 11 Teilen eines Styrol-Butadien-Blockcopolymerisates mit einem Anteil von 25 % Styrol und einer Lösungsviskosität von 26 mPa.s, 59,25 Teilen Styrol, 19,75 Teilen Acrylnitril, 0,2 Teilen tert.-Dodecylmercaptan, 12 Teilen Methylethylketon und 0,075 Teilen tert.-Butylperbenzoat wurde in einer Reaktionskaskade aus 4 Reaktionszonen polymerisiert. Die beiden ersten Zonen bestanden aus Rührkesselreaktoren und die weiteren Zonen aus Polymerisa-tionstürmen.

| | | | [Dimension] |
|---|---|---|---|
| Reaktor 1: | Füllvolumen | 3 | l |
| | Temperatur | 110 | °C |
| | Feststoffgehalt | 17,2 | % |
| Reaktor 2: | Füllvolumen | 7 | l |
| | Temperatur | 121 | °C |
| | Feststoffgehalt | 27,8 | % |
| Reaktor 3: | Füllvolumen | 10 | l |
| | Temperatur | 130 | °C |
| | Feststoffgehalt | 54,8 | % |
| Reaktor 4: | Füllvolumen | 10 | l |
| | Temperatur | 144 | °C |
| | Feststoffgehalt | 80 | |

Der Durchsatz betrug 3,5 l/h.
Die durchschnittliche Teilchengröße betrug 0,5 um.

Beispiel 2

Folgende Mischung wurde bei einem Durchsatz von 10 l/h durch eine Reaktionskaskade mit 4 Polymerisationszonen gefahren.

13     Teile  Styrol-Butadien-Blockcopolymer (LV: 28 mPa.s)
65,25    "    Styrol
21,75    "    Acrylnitril
20       "    Ethylbenzol
0,1      "    t-Butylperbenzoat

|  |  |  | | [Dimension] |
|---|---|---|---|---|
| Reaktor 1: | Füllvolumen | 4 | | l |
| | Temperatur | 104 | | °C |
| | Feststoffgehalt | 17,5 | | % |
| Reaktor 2: | Füllvolumen | 16 | | l |
| | Temperatur | 120 | | °C |
| | Feststoffgehalt | 25 | | % |
| Reaktor 3: | Füllvolumen | 10 | | l |
| | Temperatur | 135 | | °C |
| | Feststoffgehalt | 45 | | % |
| Reaktor 4: | Füllvolumen | 10 | | l |
| | Temperatur | 148 | | °C |
| | Feststoffgehalt | 65 | | % |

Die Teilchengröße betrug 0,6 um.

Vergleichsversuch A:

Anstelle des Styrol-Butadien-Copolymerisates im Beispiel 1
wurde ein Polybutadien mit einer Lösungsviskosität von
93 mPa.s eingesetzt. Im übrigen wurde wie in Beispiel 1
beschrieben verfahren.

Ergebnis:
Es entstanden nach kurzer Zeit Anbackungen in den Reaktoren 2 und 3, die zum Abbruch des Versuches zwangen.

Vergleichsversuch B:

Anstelle von 12 Teilen Methylethylketon, wie im Beispiel 1
beschrieben, wurden nur 9 Teile dieses Lösungsmittels eingesetzt. Auch in diesem Fall mußte die Reaktion aufgrund von Anbackungen im zweiten Reaktor abgebrochen werden.

Beispiel 3

Die Mischung von Beispiel 1 wurde in einer Kaskade aus 3 Türmen polymerisiert, wobei der Durchsatz 6 l/h betrug.

|  |  |  | [Dimension] |
|---|---|---|---|
| Reaktor 1: | Füllvolumen | 10 | l |
|  | Temperatur | 110 | °C |
|  | Feststoffgehalt | 26,5 | % |
| Reaktor 2: | Füllvolumen | 10 | l |
|  | Temperatur | 123 | °C |
|  | Feststoffgehalt | 50,1 | % |
| Reaktor 3: | Füllvolumen | 10 | l |
|  | Temperatur | 145 | °C |
|  | Feststoffgehalt | 80,2 | % |

Die Teilchengröße betrug 0,6 µm.

Patentansprüche

1. Verfahren zur Herstellung von ABS-Polymerisaten durch kontinuierliche Polymerisation eines Gemisches aus

$a_1$) mindestens einem vinylaromatischen Monomeren und

$a_2$) mindestens einem äthylenisch ungesättigten Monomeren im Gewichtsverhältnis $a_1 : a_2$ von 90:10 bis 10:90

in Gegenwart von

$a_3$) mindestens einem kautschukartigen Polymerisat in einem Anteil von 3 bis 35 Gew.%, bezogen auf die Summe der Monomeren $a_1$) und $a_2$),

$a_4$) mindestens einem Lösungsmittel

$a_5$) mindestens einem Radikalinitiator

und

$a_6$) gegebenenfalls einem Kettenüberträger

bei Temperaturen von 80 bis 180°C in zwei oder mehr Reaktionszonen unter Rühren,
Entfernen der Monomeren und des Lösungsmittels in einer Entgasungszone, dadurch gekennzeichnet, daß man als kautschukartiges Polymerisat $a_3$) ein solches verwendet, dessen Lösungsviskosität, gemessen in 5gew.%iger Lösung in Styrol bei 25°C, $\leq$80 mPa.s beträgt und daß das Verhältnis der Lösungs-

**0054141**

viskosität des kautschukartigen Polymerisats $a_3$) zur Konzentration des Lösungsmittels $a_4$) in Gew.%, ausgedrückt durch $[a_4/a_1+a_2+a_3+a_4]$, Werte annimmt, die $\leq 2,5$ mPa.s/% Lösungsmittel sind.

2. Verwendung der Formmassen gemäß Anspruch 1 zur Herstellung von Formteilen.

3. Formteile aus Formmassen gemäß Anspruch 1.

0054141

Nummer der Anmeldung

EP 81 10 8700

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | CHEMICAL ABSTRACTS, Band 82, Nr. 14, 7. April 1975, Zusammenfassung Nr. 87047k, Seite 31 COLUMBUS OHIO (US) & JP - A - 74 88 991 (SHOWA DENKO K.K.) (26.08.1974) * Zusammenfassung * | 1 |
| X | FR - A - 2 104 473 (DOW) * Seite 4, Zeilen 23-28; Seite 5, Zeilen 27-30; Patentanspruch 1 * | 1-3 |
| A | FR - A - 1 565 218 (DISTRENE) | |
| D/A | FR - A - 2 145 638 (BAYER) & DE - A - 2 135 348 | |

### KLASSIFIKATION DER ANMELDUNG (Int. Cl.³)

C 08 F 291/02
279/02
2/06

### RECHERCHIERTE SACHGEBIETE (Int. Cl.³)

C 08 F 291/02
279/02
279/04
279/06
255/04
255/06

### KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 21.01.1982 | MEULEMANS |

EPA form 1503.1   06.78